# EUROPÄISCHE PATENTSCHRIFT

(11) **EP 3 092 432 B1**
(45) Veröffentlichungstag und Bekanntmachung des Hinweises auf die Patenterteilung: **09.03.2022**
(21) Anmeldenummer: 15701933.2
(22) Anmeldetag: 08.01.2015
(51) Int. Cl.: F16L 53/00

(54) **BEHEIZBARE MEDIENLEITUNG, VERFAHREN ZU DEREN HERSTELLUNG UND SCHALTUNGSANORDNUNG FÜR EINE BEHEIZBARE MEDIENLEITUNG**
HEATABLE MEDIA LINE, METHOD FOR THE PRODUCTION THEREOF, AND CIRCUIT ASSEMBLY FOR A HEATABLE MEDIA LINE
CONDUITE DE FLUIDE CHAUFFANTE, PROCÉDÉ DE FABRICATION DE CETTE DERNIÈRE ET CIRCUIT POUR CONDUITE DE FLUIDE CHAUFFANTE

(30) Priorität: 08.01.2014 DE 102014000058; 08.04.2014 DE 102014005094
(43) Veröffentlichungstag der Anmeldung: 16.11.2016
(73) Patentinhaber: Voss Automotive GmbH, 51688 Wipperfürth (DE)
(72) Erfinder: ETSCHEID, Tobias, 51789 Lindlar (DE); RUDEL, Steve, 42499 Hückeswagen (DE); PLIETSCH, Reinhard, 42929 Wermelskirchen (DE); SCHWARZKOPF, Otfried, 51515 Kürten (DE); GMEINER, Swen, 51709 Marienheide (DE)
(74) Vertreter: Rebbereh, Cornelia
(86) Internationale Anmeldenummer: PCT/EP2015/000019
(87) Internationale Veröffentlichungsnummer: WO 2015/104217

(56) Entgegenhaltungen:
- EP-A1- 0 258 139
- WO-A1-2010/032017
- US-A- 4 591 700

## Beschreibung

Die Erfindung betrifft eine beheizbare Medienleitung zum Leiten zumindest eines gefriergefährdeten Mediums, wobei die beheizbare Medienleitung zumindest eine Medienleitung mit zwei Leitungsverbindern zum Anschluss der Medienleitung an zumindest eine Komponente und/oder eine andere beheizbare Medienleitung und zumindest eine Heizeinrichtung zum Beheizen des durch die Medienleitung und die Leitungsverbinder strömenden Mediums umfasst, ein Verfahren zum Herstellen einer solchen beheizbaren Medienleitung sowie eine Schaltungsanordnung einer solchen beheizbaren Medienleitung.

Beheizbare Medienleitungen mit zumindest einer Medienleitung und zumindest einem endseitig an dieser angeordneten Leitungsverbinder sind im Stand der Technik bekannt. Insbesondere in Fahrzeugen sind Medienleitungen zum Leiten von flüssigen Medien vorgesehen. Die Leitungsverbinder sind üblicherweise endseitig an einer Medienleitung angeordnet und mit dieser verbunden. Sie dienen zum Verbinden von zumindest zwei Medienleitungen oder zum Anschlussverbinden einer Medienleitung an ein beliebiges Aggregat bzw. eine beliebige Komponente, wie eine Dosiereinheit im Bereich eines Kraftfahrzeugmotors oder eine Pumpe an einem Kraftfahrzeugtank. Bei niedrigeren Temperaturen drohen die gefriergefährdeten Medien in Medienleitung und Leitungsverbinder einzufrieren, weshalb es üblich ist, eine Beheizbarkeit der Medienleitung und des Leitungsverbinders vorzusehen. Durch die Medienleitung und die mit dieser verbundenen Leitungsverbinder werden oftmals solche Medien geleitet, die aufgrund eines relativ hohen Gefrierpunktes bereits bei noch recht hohen Umgebungstemperaturen zum Gefrieren neigen, wodurch die Funktionsfähigkeit beispielsweise eines Fahrzeugs beeinträchtigt oder sogar erheblich gestört werden kann. Ersichtlich ist dies insbesondere bei Wasserleitungen für Scheibenwaschanlagen der Fall und ebenso bei Medienleitungen, mittels derer wässrige Harnstofflösung als Medium transportiert wird, die als NOₓ-Reaktionsadditiv für Dieselmotoren mit sogenannten SCR-Katalysatoren eingesetzt werden. Die Leitungsversbinder können hierbei als SCR-Kupplungen bzw. SCR-Stecker ausgebildet werden, wobei diese in ähnlicher Form auch für andere Medien verwendbar sind.

Zum Beheizen von Medienleitung und Leitungsverbindern ist es u.a. bekannt, eine Heizeinrichtung in Form von beispielsweise Heizdrähten oder Heizlitzen außenseitig um die Medienleitung und die Leitungsverbinder herum anzuordnen, zumeist in Form einer Wendelung. Gerade im Bereich der Leitungsverbinder sind auch Rückführungen der Heizdrähte bzw. der Heizlitzen häufig erforderlich, wie z.B. bei dem Aufbau nach der DE 10 2010 032 188 A1 offenbart, um diese mit elektrischen Zuleitern zu versehen bzw. endseitig elektrisch zu kontaktieren, mittels derer ein Anschluss an eine Strom- bzw. Spannungsversorgung möglich ist. Gerade aufgrund von sich bei diesen Rückführungen ergebenden Überlappungen der Heizleiter oder -litzen, die zu einer lokalen Litzenanhäufung führen, und ebenso im Bereich von Crimpstellen und in Übergangsbereichen zu den Leitungsverbindern können sogenannte Hotspotbereiche auftreten, in denen eine lokale übermäßig hohe Wärmezufuhr zu einer Beschädigung der Medienleitung bzw. des Leitungsverbinders führen kann. Da üblicherweise im Bereich der Leitungsverbinder der größte Wärmebedarf besteht, da die Wandstärke der Leitungsverbinder üblicherweise größer ist als die der Medienleitung, kommt es gerade dort zur Hotspotbildung. Derartige Hotspots können ferner durch Litzen, die in der Luft hängen, wie beispielsweise an Übergängen, Kanten und Umlenkungen, hervorgerufen werden. Ebenso können Hotspots durch Isolation der Litzen beispielsweise durch Schrumpfschläuche oder auch durch von außen aufgeprägte Umgebungstemperaturen auftreten, die zu einer lokal übermäßigen Wärmezufuhr führen. Litzen, die nahe nebeneinander angeordnet sind, können ebenfalls zu einem gegenseitigen übermäßigen Beheizen und somit zu einer Hotspotbildung führen, ferner Kombinationen aller genannter problematischer Anordnungen.

Eine solche Überlagerung und Anhäufung von Litzen bei deren Rückführungen im Bereich von Leitungsverbindern, die von einem isolierenden Hüllsystem in Form von Kappen umgeben sind, kann beispielsweise der DE 10 2010 032 188 A1 oder der WO 2013/053492 A1 entnommen werden. Bei beiden Lösungen des Standes der Technik sind mehrere Litzen auf der Medienleitung und den

Leitungsverbindern angeordnet und jeweils in Reihe geschaltet. Gemäß der WO 2013/053492 A1 wird ein differenzierter Wärmeeintrag und/oder -austrag an den Anschlussenden der Medienleitung vorgesehen. Die Differenzierung des Wärmeeintrags bzw. des Wärmeaustrags erfolgt anwendungsspezifisch. Da jeweils jedoch eine individuelle Auslegung der beheizbaren Medienleitung erforderlich ist, entsteht eine hohe Varianz bezüglich der beheizbaren Medienleitung, wobei die Längenabhängigkeit der Litzen zueinander die Variantenvielfalt erhöht. Eine große Anzahl an unterschiedlichen Leitungslängen erfordert jeweils eine neue Litzenauswahl bzw. Litzenapplikation auf Medienleitung und Leitungsverbindern. Hiermit verbunden sind zahlreiche unterschiedliche Litzenwiderstände, Litzensteigungen auf der Medienleitung und Litzen im Hinblick auf deren Widerstand auf dem Leitungsverbinder, was zu hohen Kosten bei der Herstellung der jeweiligen beheizbaren Medienleitungen führt, da eine große Auswahl an Litzen bevorratet werden muss, um die jeweils erforderliche individuelle Auslegung vornehmen zu können.

Werden gemäß der WO 2013/053492 A1 mehrere Stromkreise vorgesehen, wobei z.B. ein erster Stromkreis einen Leitungsverbinder und die Medienleitung und ein zweiter Stromkreis nur den anderen Leitungsverbinder umfasst, werden diese Stromkreise mit unterschiedlichen Regelstrategien betrieben, insbesondere eine selektive Abschaltung zumindest eines der beiden Stromkreise vorgesehen, insbesondere bei Überschreiten einer vorgebbaren Temperaturschwelle und/oder bei einem getakteten Betrieb und/oder einem Dauerbetrieb des zumindest einen Stromkreises. Das Betreiben mit unterschiedlichen Regelstrategien führt zu einem großen Aufwand und damit auch zu vergleichsweise hohen Kosten.

Eine ebenfalls bekannte Anordnungsmöglichkeit der Heizeinrichtung besteht in der Integration von Heizlitzen bzw. Heizleitern in die Wandung der Medienleitung, wie beispielsweise in der DE 10 2011 018 243 A1 bzw. der DE 10 2010 051 550 A1 offenbart. Bei beiden Lösungen des Standes der Technik wird jeweils die Heiztechnik in die Medienleitungswandung integriert, was zu einer geringeren Baugröße im Hinblick auf den Durchmesser der Medienleitung führt. Durch diese Integration der Heiztechnik in die Medienleitungswandung kann ein sogenannter PTC-Effekt erzielt werden, bei dem bei steigender Temperatur des durch die Wandung der Medienleitung hindurch erwärmten Mediums oder der Medienleitung der Stromdurchfluss reduziert wird und somit die Heizleistung abnimmt. Unter PTC wird ein Positiver Temperatur Koeffizient verstanden, unter dem PTC-Effekt ein Effekt, bei dem der elektrische Widerstand sich bei steigender Temperatur vergrößert. Dies führt dazu, dass die Medienleitung bezüglich ihrer Beheizung bei zu hohen Temperaturen reduziert wird, wenn die Heizleistung auf Null absinkt. Als problematisch erweist sich das Einbetten der Heiztechnik in die Medienleitung jedoch beim Kontaktieren der Heizleiter. Ferner können bei einer schlechten Einbettung der Heizleiter hohe Übergangswiderstände auftreten. Durch solche Übergangswiderstände kann es zu Degradationseffekten bei sich veränderndem Widerstand kommen, so dass die Beheizung in diesem Bereich sich verschlechtert und letztlich vollständig ausfallen kann. Eine weitere beheizbare Medienleitung ist auch aus dem Dokument US4591700 bekannt.

Der vorliegenden Erfindung liegt daher die Aufgabe zugrunde, die vorstehend genannten Nachteile des Standes der Technik zu überwinden, insbesondere einer Hotspotbildung, und eine in der Herstellung kostengünstigere Lösung vorzusehen, mittels derer ein differenzierte Wärmeeintrag über die gesamte Längserstreckung der beheizbaren Medienleitung hinweg möglich ist.

Die Aufgabe wird für eine beheizbare Medienleitung nach dem Oberbegriff des Anspruchs 1 dadurch gelöst, dass die Heizeinrichtung eine Heizbandlitze umfasst, die sich zumindest teilweise gewendelt um die Medienleitung und deren zumindest einen Leitungsverbinder herum erstreckt und in einen gut wärmeleitenden Kontakt mit diesen gebracht ist, die zumindest zwei Kontaktleiter umfasst, die in Kontakt mit zumindest einem elektrisch leitfähigen Kunststoff mit elektrisch leitfähigen Partikeln in Nanogröße stehen und die bezüglich ihrer Widerstände parallel geschaltet sind, wobei die Heizbandlitze beim Beheizen der Medienleitung und von deren zumindest einem Leitungsverbinder im Zusammenhang mit dem sich erwärmenden Medium einen PTC-Effekt derart zeigt, dass sich ausgehend von einer Medientemperatur im Bereich des Gefrierpunktes des Mediums, oder unterhalb dieses Gefrierpunktes, ein etwa asymptotischer Temperaturverlauf ergibt. Für ein Verfahren zum Herstellen einer solchen beheizbaren Medienleitung mit Medienleitung und zwei

Leitungsverbindern wird die Aufgabe dadurch gelöst, dass die Medienleitung und zumindest einer der Leitungsverbinder mit einer Heizbandlitze bewickelt wird, ein erstes Ende der Heizbandlitze mit einer Isolation von deren Kontaktleiterenden und ein zweites Ende der Heizbandlitze mit einer elektrischen Kontaktierung der Kontaktleiterenden versehen wird. Weiterbildungen der Erfindung sind in den abhängigen Ansprüchen definiert.

Dadurch werden eine beheizbare Medienleitung, ein Verfahren zu deren Herstellung und eine Schaltungsanordnung für diese geschaffen, bei der bzw. dem eine Heizbandlitze um die Medienleitung und den zumindest einen Leitungsverbinder von dieser herum gewendelt ist. Hierbei wird die Heizbandlitze in einen gut wärmeleitenden Kontakt mit der Medienleitung und dem zumindest einen Leitungsverbinder, d.h. bei dem eine thermische Übertragung, also Wärmeübertragung, von der Heizbandlitze auf die Medienleitung und den Leitungsverbinder gegeben ist, beispielsweise durch Kraftaufbringen beim Bewickeln der Medienleitung und Leitungsverbinder mit der Heizbandlitze bzw. durch zusätzliches Befestigen von dieser mittels z.B. eines Fixierbandes gebracht. Die Heizbandlitze umfasst zumindest zwei Kontaktleiter, die in einen elektrisch leitfähigen Kunststoff eingebettet sind. Die elektrische Leitfähigkeit des Kunststoffmaterials wird durch Dotieren des Kunststoffmaterials mit elektrisch leitfähigen Partikeln in Nanogröße geschaffen, wie beispielsweise durch ein Dotieren mit Leitruß oder Kohlefasern. Die in dem elektrisch leitfähigen Kunststoff angeordneten bzw. eingebetteten Kontaktleiter sind bzgl. ihrer Widerstände parallel geschaltet, also eine Parallelschaltung der Widerstände der beiden in den elektrisch leitfähigen Kunststoff eingebetteten Kontaktleiter durch ein Verbinden der Kontaktleiter durch den elektrisch leitfähigen Kunststoff hindurch geschaffen, wobei die Kontaktleiter an einem Ende der Heizbandlitze elektrisch isoliert und an dem anderen Ende mit elektrischen Zuleitern kontaktiert sind, um einen Anschluss an eine elektrische Energieversorgung vorsehen zu können. Die elektrischen Zuleiter können endseitig mit einem entsprechenden Stecker zum Anschluss an die elektrische Energieversorgung, also Spannungs- bzw. Stromversorgung versehen sein. Ein PTC-Effekt kann u.a. durch Leitpfade im elektrisch leitfähigen Kunststoff, die sich aufgrund der elektrisch leitfähigen Partikel ergeben, und ebenso durch die Übergangswiderstände zwischen den Kontaktleitern und dem elektrisch leitfähigen Kunststoff beim Beheizen von Medienleitung und deren zumindest einem endseitig an dieser angeordneten Leitungsverbinder erzielt werden. Der PTC-Effekt wird von der Temperatur der Heizbandlitze gesteuert, steht also im Zusammenhang mit der Temperatur der Medienleitung und der Leitungsverbinder und des durch diese strömenden Mediums. Aufgrund des PTC-Effekts der Heizbandlitze stellt sich selbstständig der jeweilige Widerstand nach Bedarf ein, so dass eine Selbstregelung der Wärmezufuhr in die beheizbare Medienleitung vorgesehen wird. Die Wärme wird in Abhängigkeit von dem jeweiligen Bedarf durch die Heizbandlitze zur Verfügung gestellt, also an den Stellen geringeren Wärmebedarfs nur eine geringere Wärmemenge in die Medienleitung bzw. den Leitungsverbinder eingekoppelt, an Stellen größeren Wärmebedarfs eine größere Wärmemenge. Hierbei wird ohne eine zusätzliche Regelungseinrichtung, also nur durch Vorsehen der Heizbandlitze und nur durch Spannungsversorgung der Heizbandlitze, die autonom selbstregelnd leitet, auch die vorhandene Umgebungstemperatur bei dem Zurverfügungstellen der Wärmemenge mit berücksichtigt, so dass eine Hotspotbildung und ein insbesondere lokales Überhitzen der beheizbaren Medienleitung effektiv vermieden werden kann. Die Effizienz der Beheizung ist bei Vorsehen der Heizbandlitze dementsprechend gut, im Unterschied zu der zumeist schlechten Effizienz von herkömmlichen in Reihe geschalteteten Heizlitzen, bei denen sich die Einzelwiderstände der einzelnen in Reihe geschalteten Litzen gegenseitig beeinflussen. Wie bereits vorstehend zum Stand der Technik gezeigt, können solche herkömmlichen Heizlitzen überhitzen und zu Hotspots und dementsprechend zu einer Beschädigung der Heizlitzen und der beheizbaren Medienleitung in diesem Bereich führen. Die Heizlitzen des Standes der Technik sehen keinen nutzbaren oder einen zu kleinen PTC-Effekt vor, sind dementsprechend nicht selbstregelnd.

Aufgrund der Selbstregelung der Heizbandlitze ist keine oder im Wesentlichen keine individuelle Einzelauslegung für jede einzelne beheizbare Medienleitung und somit keine große Variantenbildung mehr erforderlich, wie sie ansonsten bei den bekannten Heizlitzen vorgesehen werden muss. Das Portfolio an Heizbandlitzen kann dadurch sehr klein gehalten werden, was zu einem deutlich verminderten Aufwand bei der Auslegung und beim Bevorraten und dementsprechend auch zu deutlich verringerten Lagerhaltungskosten führt. Dies wirkt sich auch auf Skaleneffekte positiv aus.

Durch die mittels der Verwendung der Heizbandlitze vorteilhaft mögliche temperaturabhängige Heizleistungsbegrenzung ohne Vorsehen einer zusätzlichen Abschaltelektronik ist die beheizbare Medienleitung mit dieser Heizbandlitze eigensicher, so dass es zu keinem Überhitzen der beheizbaren Medienleitung kommt. Ferner ist aufgrund der Parallelschaltung der Kontaktleiter nur eine einseitige Kontaktierung mit elektrischen Zuleitern zum Anschluss an eine elektrische Energieversorgung erforderlich. Das andere Ende der Heizbandlitze kann demgegenüber elektrisch isoliert werden, wie bereits erwähnt, so dass die Montage der Heizbandbandlitze und die Konfektionierung der beheizbaren Medienleitung hierdurch deutlich erleichtert werden.

Es wird eine längenunabhängige spezifische Heizleistung durch die Heizbandlitze zur Verfügung gestellt, also an jeder Stelle der beheizbaren Medienleitung genau die Heizleistung, die dort benötigt wird, um das durch die Medienleitung bzw. deren endseitig angeordnete Leitungsverbinder strömende gefriergefährdete Medium aufzutauen und strömungsfähig zu halten.

Das Bewickeln von Medienleitung und endseitig an dieser angeordnetem zumindest einen Leitungsverbinder kann adaptiv erfolgen. Unter einem solchen adaptiven Aufbringen wird das Vorsehen der Heizbandlitze angepasst an die jeweiligen Erfordernisse des Anwendungsfalls verstanden. Die Heizbandlitze wird somit genau an den Stellen der beheizbaren Medienleitung angeordnet, an denen ein Wärmeeintrag in die Medienleitung bzw. deren Leitungsverbinder gewünscht und erforderlich wird. Hierbei kann ein Bewickeln auch mit der gewünschten unterschiedlichen Steigung und in unterschiedlicher Formgebung erfolgen.

Die Auslegung bzw. Auswahl der Heizbandlitze kann für unterschiedliche Außendurchmesser der Medienleitung dahingehend erfolgen, dass jeweils die gleiche Heizbandlitze auch für unterschiedliche Außendurchmesser der Medienleitung verwendet wird oder dass jeweils unterschiedliche Heizbandlitzen, also Heizbandlitzen, die eine unterschiedliche spezifische Heizleistung liefern, zur Applikation auf Medienleitungen mit unterschiedlichen Außendurchmessern verwendet werden. Die Auslegung kann dabei dahingehend erfolgen, dass in Abhängigkeit von dem Außendurchmesser der Medienleitung Heizbandlitzen mit unterschiedlicher spezifischer Heizleistung verwendet werden, die mit jeweils mit derselben Steigung auf die Medienleitung aufgewickelt werden. Medienleitungen mit geringen Abmessungen/Außendurchmessern werden dabei mit jeweils derselben Steigung wie Medienleitungen mit größeren Abmessungen/ Außendurchmessern, jedoch mit Heizbandlitzen mit niedrigerer spezifischer Heizleistung als Medienleitungen mit größeren Abmessungen/ Außendurchmessern bewickelt. Die Auswahl der Heizbandlitze erfolgt somit dahingehend, dass bei einem vergleichsweise geringen Außendurchmesser der Medienleitung eine Heizbandlitze mit entsprechend niedrigerer spezifischer Heizleistung verwendet wird als bei Medienleitungen mit einem dementsprechend größeren Außendurchmesser, bei denen eine Heizbandlitze mit einer dementsprechend größeren spezifischen Heizleistung verwendet wird, wobei unabhängig von dem Außendurchmesser der Medienleitung und der von der Heizbandlitze zur Verfügung gestellten spezifischen Heizleistung stets dieselbe Steigung für das Umwickeln der Medienleitung mit der Heizbandlitze gewählt wird. Beispielsweise kann bei sogenannten SCR-Leitungssystemen die Medienleitung eine Abmessung von 4 × 1 mm aufweisen und die Heizbandlitze mit einer Steigung von 70 mm um diese herumgewickelt werden, wobei sich eine Heizleistung bei -30°C von z.B. 12,5 Watt pro Meter (W/m) auf der Medienleitung ergibt. Wird bei einer größeren Medienleitung von beispielsweise 5 × 1 mm die Steigung konstant auf 70 mm gehalten, jedoch eine andere Heizbandlitze mit einer größeren spezifischen Heizleistung verwendet, kann bei -30°C eine

Heizleistung von beispielsweise 14 bis 15 W/m auf der Medienleitung erzielt werden. Bei einer noch größeren Medienleitung von beispielsweise 8 × 1 mm kann bei weiterem Konstanthalten der Steigung auf 70 mm bei Wahl einer wiederum anderen Heizbandlitze mit einer nochmals größeren spezifischen Heizleistung die von dieser bei -30°C bereitgestellte Heizleistung 15 bis 16 W/m betragen. Die von der Heizbandlitze jeweils zur Verfügung gestellte Heizleistung nimmt bei höheren Temperaturen ab und liegt insbesondere bei +5°C bei 0 bis 1 W/m, insbesondere 0,5 W/m.

Soll jeweils die gleiche Heizbandlitze mit dementsprechend identischer bzw. gleicher spezifischer Heizleistung verwendet werden, kann in Abhängigkeit von dem Außendurchmesser der Medienleitung die Steigung der Wicklung der Heizbandlitze auf der Medienleitung jeweils variiert werden. Insbesondere wird bei einer Medienleitung mit einem vergleichsweise geringen Außendurchmesser die Heizbandlitze mit einer höheren Steigung als bei einer Medienleitung mit einem größeren Außendurchmesser aufgewickelt. Hierbei kann beispielsweise je nach den Abmessungen der Medienleitung eine Steigung von 30 bis 50 mm vorgesehen werden, z.B. bei einer Medienleitung mit Abmessung 8 × 1 mm eine Steigung von 50 mm, bei einer Medienleitung mit Abmessung 5 × 1 mm eine Steigung von 60 mm und bei einer Medienleitung mit Abmessung 4 × 1 mm eine Steigung von 70 mm verwendet werden. Es hat sich gezeigt, dass ab einer Steigung von ca. 50 mm eine Erhöhung der Steigung nur noch geringen Einfluss auf die erforderliche Heizbandlitzenlänge und somit auch auf die durch eine Steigungsänderung erzeugte spezifische Heizleistungsänderung hat. Es ist somit entweder eine Varianz der Heizbandlitze bei Konstanthalten der Steigung der Wicklung von dieser auf der Medienleitung oder eine Varianz der Steigung bei jeweils gleicher Heizbandlitze, also Heizbandlitze mit der gleichen spezifischen Heizleistung, möglich. Vergleicht man also einzelne mit Heizbandlitze versehene, beheizbare Medienleitungen eines Portfolios von Medienleitungen unterschiedlicher Abmessungen miteinander, ergäbe sich entweder, dass alle Medienleitungen mit einer Heizbandlitze gleicher spezifischer Heizleistung bewickelt sind, wobei je nach Außendurchmesser der Medienleitung die Steigung der Heizbandlitze auf der Medienleitung variiert oder dass die Heizbandlitze stets auf allen Medienleitung mit dergleichen Steigung aufgewickelt ist, jedoch je nach Außendurchmesser der Medienleitung die Heizleistung, die die Heizbandlitze zur Verfügung stellt, variiert.

Bei Einschalten der elektrischen Beheizung der beheizbaren Medienleitung durch die Heizbandlitze kann ein hoher Einschaltstrom auftreten. Durch diesen kann eine Sicherung auslösen, die die Beheizung wieder ausschaltet. Um dies zu verhindern, also das Auftreten eines hohen Einschaltstroms bzw. um diesen zu reduzieren, wird vorteilhaft zumindest eine einem hohen Einschaltstrom entgegenwirkende Einrichtung, insbesondere ein NTC-Widerstand, in Reihe mit der Heizbandlitze geschaltet. Durch Vorsehen einer einem hohen Einschaltstrom entgegenwirkenden Einrichtung, wie eines NTC-Widerstandes, ist ein Leistungsabfall am NTC-Widerstand, hierdurch eine Reduzierung des Einschaltstroms und dementsprechend eine Glättung der Heizkurve der Heizbandlitze möglich, so dass der Heizbetrieb gerade auch bei einem hohen und schnellen Wärmebedarf aufgrund von niedrigen Temperaturen sichergestellt werden kann.

Eine einem solchen hohen Einschaltstrom entgegenwirkende Einrichtung, insbesondere ein NTC-Widerstand (Negativ-Temperatur-Koeffizient-Thermistor), kann beispielsweise in einen der elektrischen Zuleiter der Heizbandlitze integriert werden bzw. zwischen diesem und einem Stecker zum Anschluss des elektrischen Zuleiters an eine elektrische Energieversorgung angeordnet bzw. geschaltet werden, somit vorteilhaft in Reihe mit der Heizbandlitze. NTC-Widerstände sind Heißleiter, deren elektrischer Widerstand einen negativen Temperaturkoeffizienten aufweist. Sie leiten bei hohen Temperaturen elektrischen Strom besser als bei niedrigen Temperaturen. Die Einrichtung bzw. insbesondere der NTC-Widerstand kann in ein den jeweiligen Leitungsverbinder, in dessen Bereich der elektrische Zuleiter angeordnet ist, umgebendes isolierendes Hüllsystem, wie eine Kappe, aufgenommen werden. Ferner kann die Einrichtung bzw. der NTC-Widerstand in Verbindung mit dem elektrischen Zuleiter auch außerhalb eines solchen isolierenden Hüllsystems, insbesondere einer entsprechenden den Leitungsverbinder isolierend umgebenden Kappe, der beheizbaren Medienleitung angeordnet werden.

Der besondere Aufbau der Heizbandlitze bewirkt ein qualitatives Abregeln der Heizleistung und führt zu dem gewünschten PTC-Effekt. Über die Dotierung des Kunststoffmaterials mit den elektrisch leitfähigen Partikeln, insbesondere Leitruß oder Kohlefasern, kann eine Maximaltemperatur eingestellt werden, bei der der Heizvorgang beim qualitativen Abregeln beendet wird, bei der also die Wärmezufuhr aufgrund der der Heizbandlitze innewohnenden temperaturabhängigen Leistungsbegrenzung selbständig nahezu abgeschaltet wird. Die vorgebbare Maximaltemperatur kann bei z.B. 70 bis 80 °C liegen. Für eine Medienleitung kann ein sehr viel niedrigerer Temperaturwert von beispielsweise 20 bis 50 °C als realistischer beim Abregeln der Wärmezufuhr durch die Heizbandlitze zu erreichender Temperaturwert eingestellt werden. Ein optimaler bzw. idealer Temperaturwert, bei dem die Wärmezufuhr beendet wird, ist eine Temperatur von +5 °C, da ab dieser Temperatur ein weiteres Beheizen üblicherweise nicht erforderlich ist, somit die Beheizung abgeschaltet werden kann. Die Annäherung an den vorgebbaren Temperaturwert, also der asymptotische Temperaturverlauf, erfolgt beim Beheizen insbesondere von Werten von weniger als -11 °C ansteigend, insbesondere von Werten von -20 °C bis -40 °C ansteigend.

Durch den Abregeleffekt aufgrund der Dotierung des Kunststoffmaterials mit elektrisch leitfähigen Partikeln stellt sich nach der Heizzeit ein konstanter Wert von beispielsweise ungefähr 1/3 der Ausgangsheizleistung ein. Die größte Heizleistung ist zumeist die Ausgangsheizleistung. Diese ist bei extrem niedrigen Temperaturen von insbesondere -20 °C bis -40 °C am höchsten. Die Heizzeit bestimmt sich danach, wie lange es dauert, bis sich die vorgegebene zu erreichende Temperatur eingestellt hat, so dass sich am Ende der Heizzeit die anfänglich für die niedrigeren Temperaturen benötigte Ausgangsheizleistung auf beispielsweise ungefähr 1/3 reduziert. Die Heizzeit kann beispielsweise 0 bis 5 Minuten betragen. Die zum Beheizen der Leitungsverbinder benötigte (längenunabhängige) Heizleistung beträgt beispielsweise 1 bis 2 Watt pro Leitungsverbinder, insbesondere 1,4 Watt pro Leitungsverbinder, die der Medienleitung zwischen den Leitungsverbindern beispielsweise 10 bis 16 W/m, insbesondere 12,5 bis 14 W/m.

Als besonders vorteilhaft erweist es sich, dass die Schaltungsanordnung frei von einer zusätzlichen Regelungseinrichtung ist, eine solche also nicht benötigt, da die Heizbandlitze selbstständig diese Regelung vornimmt aufgrund des ihr innenwohnenden PTC-Effekts. Im Unterschied zum Stand der Technik, bei dem übliche Heizlitzen verwendet werden, ist es somit nicht erforderlich, der Heizbandlitze eine Abschaltelektronik zuzuordnen. Gleichwohl könnte grundsätzlich eine Regelungseinrichtung vorgesehen werden, wenn dies gewünscht wird. Dies ist allerdings normalerweise nicht erforderlich.

Der Aufbau der Heizbandlitze führt zu drei in Reihe geschalteten Widerständen, nämlich zwei Übergangswiderständen der Kontaktleiter in das Material des elektrisch leitfähigen Kunststoffs und einen Materialwiderstand dieses elektrisch leitfähigen Kunststoffs. Es sind somit der Übergangswiderstand von dem ersten Kontaktleiter zu dem elektrisch leitfähigen Kunststoffmaterial, der elektrische Widerstand des elektrisch leitfähigen Kunststoffmaterials und der Übergangswiderstand von dem elektrisch leitfähigen Kunststoffmaterial zu dem zweiten Kontaktleiter in Reihe geschaltet.

Bei Koppeln zweier durch jeweils eine Heizbandlitze beheizbarer Medienleitungen können die Heizbandlitzen in Reihe geschaltet werden, wobei nur ein Anschluss an eine elektrische Energieversorgung vorgesehen ist. Dies kann sich insbesondere bei zwei miteinander gekoppelten kurzen beheizbaren Medienleitungen als vorteilhaft erweisen. Alternativ ist es möglich, bei Koppeln zweier durch jeweils eine Heizbandlitze beheizbarer Medienleitungen die Heizbandlitzen parallel zu schalten, wobei jede der Heizbandlitzen getrennt an eine elektrische Energieversorgung anschließbar oder angeschlossen ist. Bei dieser Lösung kann beispielsweise bei einem Fahrzeug bei Anordnen von zwei Medienleitungen zwischen einer Dosiereinheit im Bereich eines Fahrzeugmotors und einer Pumpe im Bereich eines Fahrzeugtanks ein getrennter Anschluss der jeweiligen elektrischen Zuleiter der beheizbaren Medienleitungen an eine vorgesehene Energieversorgung bzw. Spannungs- oder Stromversorgung vorgesehen werden. An der Trennstelle bzw. Verbindungsstelle der beiden beheizbaren Medienleitungen kann ein Anschluss der einen beheizbaren Medienleitung über eine separate elektrische Zuleitung, an deren Ende insbesondere ein Stecker vorgesehen ist, an eine elektrische Energieversorgung vorgesehen werden. In diesem Zusammenhang erweist es sich als besonders vorteilhaft, die separate elektrische Zuleitung oder die elektrischen Zuleiter zum Anschluss der von der Energieversorgung entfernt angeordneten Heizbandlitze der zweiten Medienleitung entlang der ersten Medienleitung zu führen. Hierdurch kann auch ein Kraftausgleich beim Bewickeln der ersten mit der Heizbandlitze bewickelten Medienleitung mit der separaten elektrischen Zuleitung erzielt werden. Beispielsweise kann eine über Kreuz geführte Bewicklung der Medienleitung mit der Heizbandlitze und der separaten elektrischen Zuleitung für die andere beheizbare Medienleitung vorgesehen werden.

In einer Ausführungsform einer beheizbaren Medienleitung können sowohl eine übliche Heizlitze als auch eine Heizbandlitze bei der beheizbaren Medienleitung vorgesehen werden. Diese können zueinander parallel geschaltet werden. Die herkömmliche Heizlitze kann dabei beispielsweise die Grundheizleistung liefern und die Heizbandlitze zum schnellen Aufheizen mit Abregelverhalten genutzt werden. Ferner ist es möglich, eine herkömmliche Heizlitze in Reihe zu der Heizbandlitze zu schalten. Durch den PTC-Effekt der Heizbandlitze kann die Heizlitze positiv beeinflusst werden, um ein lokales Überhitzen und somit das Auftreten von sogenannten Hotspots sicher zu vermeiden.

Die aufgrund der Selbstregelung der Heizbandlitze gegebene Möglichkeit, nur wenige Varianten von Heizbandlitzen vorsehen zu müssen, insbesondere bei einer kontinuierlichen Bewicklung, bringt auch im Hinblick auf sogenannte Skaleneffekte große Vorteile mit sich. Unter Skaleneffekten werden Kostenersparnisse verstanden, die bei einer zunehmenden Ausbringungsmenge durch Massenproduktionsvorteile aufgrund geringer Diversität entstehen.

Ein diskontinuierliches Bewickeln von Medienleitung und Leitungsverbindern mit der Heizbandlitze ist selbstverständlich ebenfalls möglich.

Zur näheren Erläuterung der Erfindung werden im Folgenden Ausführungsbeispiele von dieser näher anhand der Zeichnungen beschrieben. Diese zeigen in:
- Figur 1: eine Seitenansicht einer erfindungsgemäßen beheizbaren Medienleitung mit einer Medienleitung mit zwei endseitig daran angeordneten Leitungsverbindern und einer um die beiden Leitungsverbinder und die dazwischen angeordnete Medienleitung herum gewendelten erfindungsgemäßen Heizbandlitze,
- Figur 2: eine Prinzipskizze der Schaltungsanordnung der beheizbaren Medienleitung gemäß Figur 1,
- Figur 3a und Figur 3b: Prinzipskizzen von Schaltungsanordnungen von beheizbaren Medienleitungen des Standes der Technik,
- Figur 4: eine Prinzipskizze einer Anordnung aus mehreren erfindungsgemäßen beheizbaren Medienleitungen, die zwischen einer Dosiereinheit im Bereich eines Fahrzeugmotors und einem Fahrzeugtank mit Pumpe angeordnet sind, wobei die beiden beheizbaren Medienleitungen über ihre Leitungsverbinder, die eine Trennstelle bilden, aneinandergekoppelt sind,
- Figur 5: eine Seitenansicht einer erfindungsgemäßen beheizbaren Medienleitung als Prinzipskizze, wobei auf der Medienleitung parallel mit konstantem Versatz eine erfindungsgemäße Heizbandlitze und elektrische Zuleiter aufgewickelt sind,
- Figur 6: ein Temperatur-Zeit-Diagramm zum Veranschaulichen der Auslegung einer erfindungsgemäßen Heizbandlitze,
- Figur 7: ein Leistungs-Zeit-Diagramm zum Veranschaulichen der Auslegung einer erfindungsgemäßen Heizbandlitze im Hinblick auf einen Abregeleffekt, der durch Verwendung der erfindungsgemäßen Heizbandlitze bezüglich der Heizleistung erzielt wird,
- Figur 8: eine seitliche Ansicht einer erfindungsgemäßen beheizbaren Medienleitung mit erfindungsgemäßer Heizbandlitze und NTC-Widerstand zum Reduzieren des Einschaltstroms als Prinzipskizze,
- Figur 9: eine Detailansicht eines mit einer erfindungsgemäßen Heizbandlitze und einem NTC-Widerstand versehenen Leitungsverbinders als Prinzipskizze,
- Figur 10: ein Leistungs-Zeit-Diagramm zum Veranschaulichen der Wirkung des NTC-Widerstands gemäß Figur 8 und 9 im Hinblick auf die Reduzierung des Einschaltstroms beim Starten eines Heizvorgangs,
- Figur 11: ein Leistungs-Temperatur-Diagramm zum Veranschaulichen der Auslegung einer erfindungsgemäßen Heizbandlitze bzw. Medienleitung am Beispiel dreier verschiedener Medienleitungsaußendurchmesser, und
- Figur 12: ein Leistungs-Temperatur-Diagramm, in dem eine alternative Ausführungsvariante zu der in Figur 11 gezeigten Auslegung einer erfindungsgemäßen Heizbandlitze für verschiedene Abmessungen von Medienleitungen aufgezeigt ist, wobei jeweils ein Heizband mit gleicher spezifischer Heizleistung verwendet und mit medienleitungsabmessungsabhängig unterschiedlicher Steigung auf der Medienleitung aufgewickelt wird.

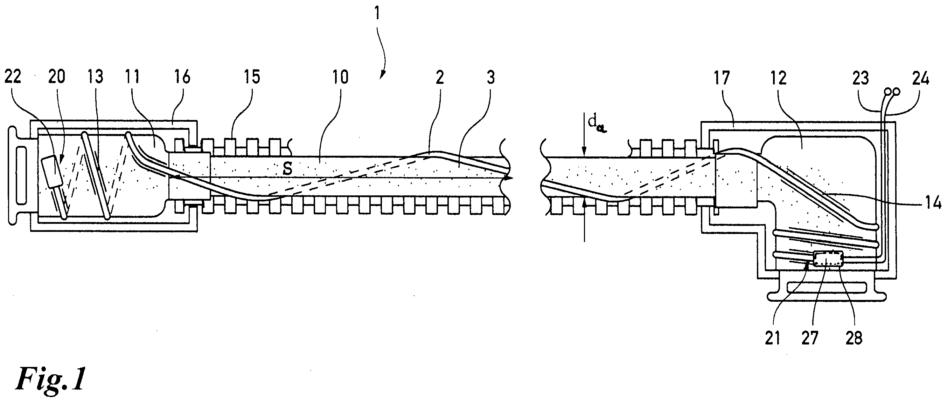

Figur 1 zeigt eine Seitenansicht einer beheizbaren Medienleitung 1 mit einer Medienleitung 10 mit endseitig an dieser angeordneten und mit dieser verbundenen Leitungsverbindern 11, 12. Die Medienleitung 10 weist einen Außendurchmesser dₐ auf. Beide Leitungsverbinder sind als Kupplungen ausgebildet, in die jeweils ein Stecker als Gegenstück eingefügt werden kann. Der Leitungsverbinder 11 ist als gerader Leitungsverbinder ausgebildet und der Leitungsverbinder 12 als Winkel-Leitungsverbinder. Um beide Leitungsverbinder 11, 12 und die Medienleitung 10, die zwischen diesen angeordnet ist, herum ist eine Heizbandlitze 2 mit einer Steigung S gewickelt. Die Heizbandlitze 2 dient dem Beheizen der Medienleitung 10 und der beiden Leitungsverbinder 11, 12 bzw. eines durch diese hindurch strömenden Mediums 3. Sie ist jeweils auf der Außenseite des geraden Leitungsverbinders 11, der Medienleitung 10 und des Winkel-Leitungsverbinders 12 angeordnet. Auf den beiden Leitungsverbindern 11, 12 ist sie in dort für das Anordnen der Heizbandlitze 2 vorgesehene Spuren 13, 14 eingefügt, wobei sie in den Spuren 13, 14 auch ohne weitere Fixierung gehalten werden kann, wenn diese zum klemmenden Halten der Heizbandlitze 2 ausgebildet sind. Die Heizbandlitze 2 ist weder auf der Medienleitung 10 noch auf den Leitungsverbindern 11,12 rückgeführt, sondern erstreckt sich über den Leitungsverbinder 11, über die Medienleitung 10 und den Leitungsverbinder 12 hinweg. Auf dem Leitungsverbinder 11 ist das erste Ende 20 der Heizbandlitze 2 angeordnet und endseitig durch eine isolierende Einrichtung 22 zumindest im Bereich von deren Kontaktleitern isoliert. An dem gegenüberliegenden zweiten Ende 21 der Heizbandlitze 2 sind endseitig an dieser zwei elektrische Zuleiter 23, 24 zur Kontaktierung der Heizbandlitze 2 angeschlossen bzw. mit den Kontaktleitern der Heizbandlitze 2 verbunden, so dass ein Anschluss der Heizbandlitze an eine Strom- bzw. Spannungsversorgung (nicht gezeigt) ermöglicht wird. Die Kontaktierung erfolgt insbesondere über Crimpstellen 27, die außenseitig durch eine Abdeckung 28 abgedichtet sind.

Außenseitig sind die beiden Leitungsverbinder 11, 12 und die Medienleitung 10 von einem isolierenden Hüllsystem umgeben. Das Hüllsystem ist um die Medienleitung 10 herum als Wellrohr 15, um die beiden Leitungsverbinder 11, 12 herum als isolierende Kappen 16, 17 ausgebildet. Anstelle des Vorsehens solcher isolierender Kappen 16, 17 ist auch ein Vergießen mit einer isolierenden Vergussmasse möglich, so dass hierüber eine isolierende Umhüllung der Leitungsverbinder geschaffen werden kann. Wird ein solches Vergießen bzw. Umgießen und Einbetten der Leitungsverbinder vorgesehen, kann die isolierende Einrichtung 22 zum endseitigen Isolieren der Kontaktleiter der Heizbandlitze 2 entfallen, da eine solche Isolierung durch die isolierende Vergussmasse geschaffen wird.

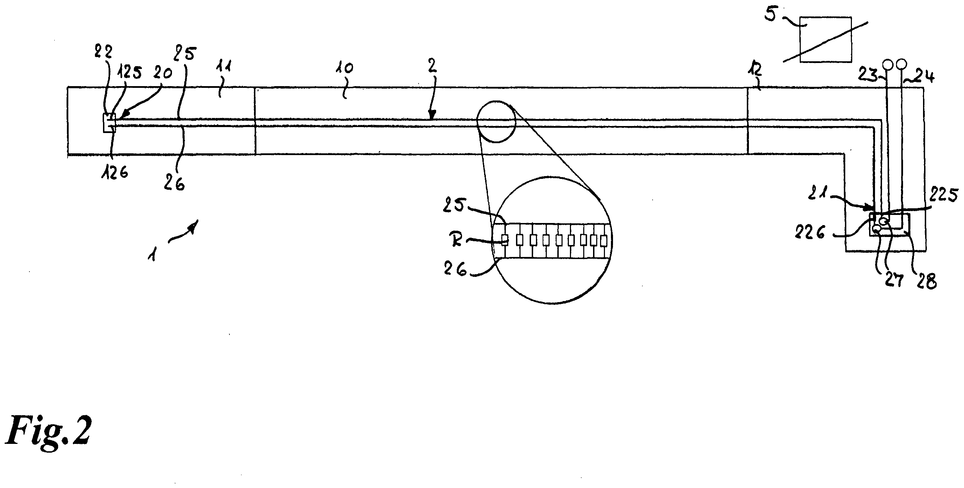

Die Medienleitung 10 und die beiden Leitungsverbinder 11, 12 sind kontinuierlich mit der Heizbandlitze 2 bewickelt. Die Steigung S der Bewicklung kann sich im Bereich der Medienleitung von der im Bereich der Leitungsverbinder 11, 12 unterscheiden. Die Heizbandlitze 2 selbst umfasst, wie besser Figur 2 entnommen werden kann, die bereits genannten Kontaktleiter 25, 26, die in eine elektrisch leitfähige Kunststoffmasse eingefügt sind. Die Kunststoffmasse weist eine Dotierung mit elektrisch leitfähigen Partikeln, die metallisch oder nichtmetallisch sein können, auf. Insbesondere sind Leitruß und/oder Kohlefasern als Partikel in dem Kunststoffmaterial angeordnet. Durch das Vorsehen der isolierenden Einrichtung 22 an dem einen Kontaktleiterende 125, 126 und der elektrischen Zuleiter 23, 24 an dem anderen Kontaktleiterende 225, 226 wird eine Parallelschaltung der Widerstände R der beiden in den elektrisch leitfähigen Kunststoff eingebetteten Kontaktleiter vorgesehen. Zur Veranschaulichung sind in Figur 2 beispielhaft in einer partiellen Vergrößerung eine Anzahl dieser parallel geschalteten Widerstände R gezeigt. Im Unterschied zum Stand der Technik führt die Parallelschaltung der Widerstände der beiden Kontaktleiter 25, 26 dazu, dass die Heizbandlitze 2 einen PTC-Effekt zeigt und somit selbstregelnd ist. Hierbei tritt eine temperaturabhängige Leistungsbegrenzung auf, so dass das Vorsehen einer separaten Regelungseinrichtung 5 verzichtbar ist, da selbständig ein Abschalten Beheizung durch die Heizbandlitze, somit der durch diese vorgesehenen Beheizung der Medienleitung und der Leitungsverbinder, bei Überschreiten einer vorgebbaren Temperatur erfolgt. Die Regelungseinrichtung 5 ist daher in Figur 2 durchgestrichen gezeigt. Ein zusätzliches Vorsehen einer Abschaltelektronik, wie sie beim Stand der Technik erforderlich ist, entfällt hier. Grundsätzlich kann, wenn dies gewünscht wird, allerdings eine solche Regelungseinrichtung 5 optional vorgesehen werden.

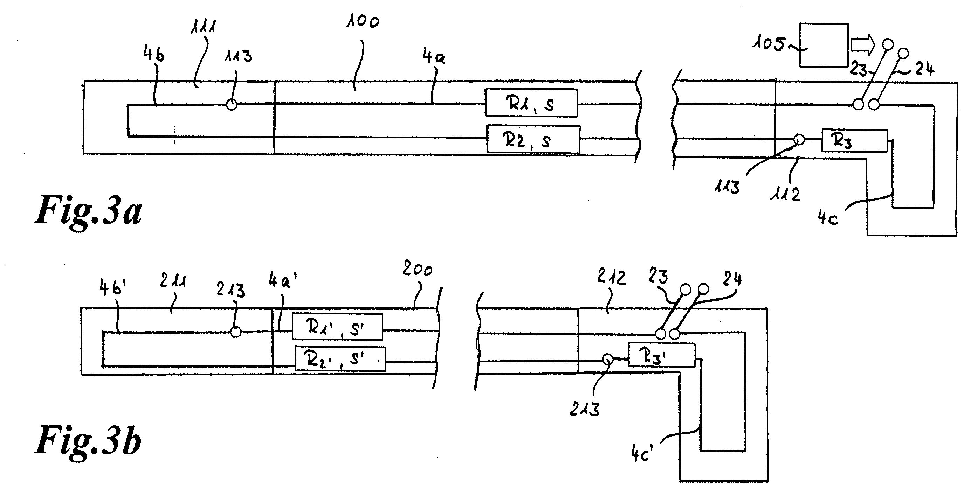

Ausbildungen von Medienleitungen 100, 200 mit endseitig an diesen angeordneten Leitungsverbindern 111, 112, 211, 212, die entsprechend dem Stand der Technik mit Heizlitzen 4a, 4b, 4c, 4a', 4b', 4c' versehen sind, die in Reihe hintereinander geschaltet sind, sind beispielhaft in den Figuren 3a und 3b gezeigt. Die einzelnen Heizlitzen 4a, 4b, 4c, 4a', 4b', 4c' weisen jeweils einen Widerstand R₁, R₂, R₃ bzw. R_{1'}, R_{2'}, R_{3'} auf. Ferner ist jeweils eine Wicklungssteigung s bzw. s' der einzelnen Heizlitzen 4a, 4b, 4c, 4a', 4b', 4c'vorgesehen und diese rückgewickelt, um die Heizlitzen auf den Leitungsverbindern und der Medienleitung anordnen und zu den elektrischen Zuleitern, die im Bereich des Leitungsverbinders 112 angeordnet sind, führen und mit diesen verbinden zu können. Ein Verbinden erfolgt über Crimpstellen 113, 213. Gerade im Bereich der Rückwicklungsbereiche und Crimpstellen sowie je nach Art der Steckergeometrie können sogenannte Hotspots, also Stellen mit besonders starker Erhitzung bzw. Hitzestaustellen auftreten, im Bereich der Rückwicklungen insbesondere aufgrund der nahe beieinander liegenden Windungen der Heizlitzen 4a, 4b, 4c, 4a', 4b', 4c'. Der Unterschied zwischen den beiden beheizbaren Medienleitungen 100, 200 gemäß Figur 3a und Figur 3b besteht darin, dass die Medienleitung 100 gemäß Figur 3a länger ist als die Medienleitung 200 gemäß Figur 3b. Wie aus den Figuren 3a und 3b ersichtlich, ist es bei Vorsehen herkömmlicher Heizlitzen 4a, 4b, 4c, 4a', 4b', 4c' erforderlich, aufgrund der Reihenschaltung der Heizlitzen 4a, 4b, 4c, 4a', 4b', 4c' ein großes Litzenportfolio vorzuhalten und diese mit unterschiedlichen Steigungen auf Medienleitung und Leitungsverbindern anzuordnen, um jeweils über die Längserstreckung der Medienleitung und der Leitungsverbinder hinweg die erforderliche Wärmezufuhr zur Verfügung stellen zu können. Dies ist zugleich verbunden mit hohen Rüstzeiten dementsprechend auch hohen Kosten. Dies ist bei Vorsehen der Heizbandlitzen 2, wie sie beispielhaft in den Figuren 1 und 2 gezeigt sind, nicht erforderlich, da eine Parallelschaltung der Kontaktleiter-Widerstände R hierbei vorgesehen ist. Bei den in Figur 3a und 3b gezeigten herkömmlichen beheizbaren Medienleitungen 100, 200 muss stets eine Regelungseinrichtung 105 zur Taktung und gegebenenfalls Abschaltung der Beheizung zum Vermeiden eines Überhitzens vorgesehen werden, während eine solche bei der beheizbaren Medienleitung 1, die mit der erfindungsgemäßen Heizbandlitze 2 versehen ist, entfallen kann. Grundsätzlich ist es jedoch ebenfalls möglich, hier eine Regelungseinrichtung vorzusehen, wenn dies gewünscht wird.

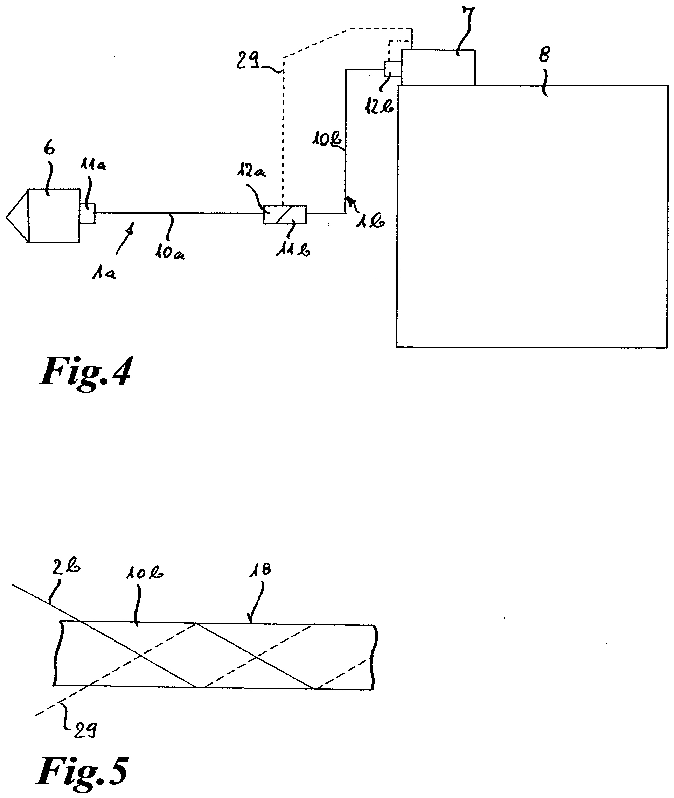

Figur 4 zeigt eine Aneinanderreihung zweier beheizbarer Medienleitungen 1a, 1b, wobei eine der beiden Medienleitungen 10a der beheizbaren Medienleitung 1a endseitig an eine Dosiereinheit 6, die im Bereich eines Fahrzeugmotors angeordnet ist, angeschlossen ist und die zweite Medienleitung 10b beheizbare Medienleitung 1b an eine Pumpe 7 eines Kraftfahrzeugtanks 8 angeschlossen ist. Im Bereich einer Trennstelle 9 sind der Leitungsverbinder 12a der ersten beheizbaren Medienleitung 1a und der Leitungsverbinder 11b der zweiten beheizbaren Medienleitung 1b trennbar aneinander gekoppelt. Beispielsweise erfolgt dies über ein Einstecken eines Steckers in eine Kupplung, wobei der eine Leitungsverbinder als Stecker und der andere als Kupplung ausgebildet ist. Die beiden Heizbandlitzen 2a, 2b der beiden beheizbaren Medienleitungen 1a, 1b können in Reihe geschaltet werden, was sich insbesondere bei kurzen beheizbaren Medienleitungen als vorteilhaft erweisen kann. Eine bevorzugte Schaltungsanordnung sieht jedoch eine Parallelschaltung der Heizbandlitzen 2a, 2b der beiden beheizbaren Medienleitungen 1a, 1b vor. Hierbei werden die beiden Heizbandlitzen 2a, 2b jeweils separat an eine elektrische Energieversorgung angeschlossen, die zweite Medienleitung 1b im Bereich der Pumpe 7 bzw. des Kraftfahrzeugtanks 8 und die erste Medienleitung 1a an der Trennstelle 9 über einen zweiten Stecker von elektrischen Zuleitern. Zu diesem Zweck ist eine elektrische Zuleitung 29 zur Spannungsversorgung zu der Trennstelle 9 geführt, wie in Figur 4 angedeutet.

Um diese weitere Zuleitung 29 geschützt zu der Trennstelle 9 zu leiten, kann diese entlang der zweiten Medienleitung 1b geführt werden, wie dies beispielhaft in Figur 5 angedeutet ist. Hierbei die Zuleitung 29 zur Spannungsversorgung parallel mit der Heizbandlitze 2b mit konstantem Versatz um die Medienleitung 10b außenseitig herumgeführt, wodurch ein Kraftausgleich erzielt werden kann, da die Heizbandlitze 2b und die elektrische Zuleitung 29 gegengleich, jedoch parallel mit konstantem Versatz auf der Außenseite 18 der Medienleitung 10b durch Bewickeln aufgebracht sind.

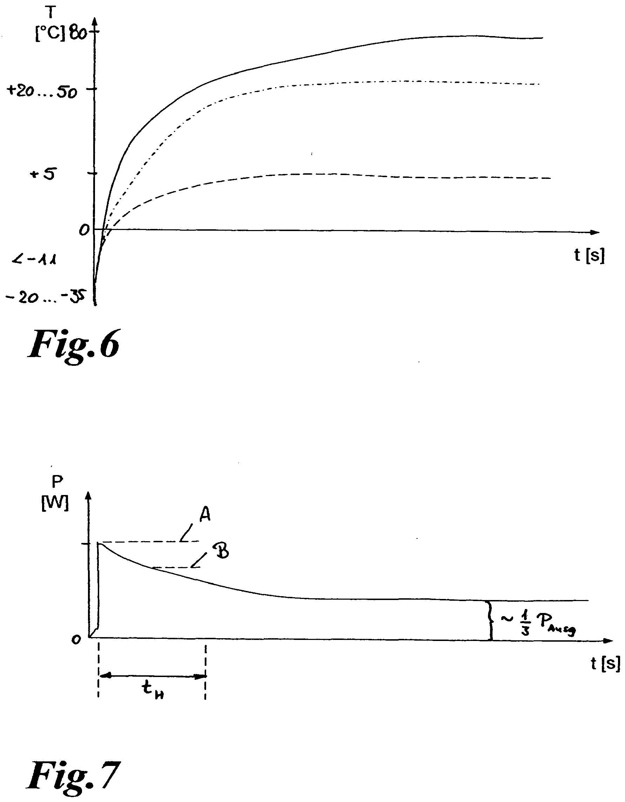

Aus Figur 6 gehen die Vorteile der temperaturabhängigen Leistungsbegrenzung bzw. des PTC-Effekts der Heizbandlitze 2 hervor. Aufgetragen ist der asymptotische Temperaturverlauf der Medientemperatur. Über die Dotierung des elektrisch leitfähigen Kunststoffs mit elektrisch leitfähigen Partikeln kann die Höhe der Maximaltemperatur, bei der die Heizbandlitze abregelt, eingestellt werden. Beispielhaft sind hier eine Maximaltemperatur von kleiner als 70 bis 80°C, eine mittlere Temperatur im Bereich von 20 bis 50°C als realistische Abregeltemperatur und eine optimale bzw. ideale Temperatur von +5°C durch die drei Kurven angegeben. Der Beheizungsvorgang beginnt jeweils bei Temperaturen von kleiner als -11°C, insbesondere bei Temperaturen von -20°C bis -35°C.

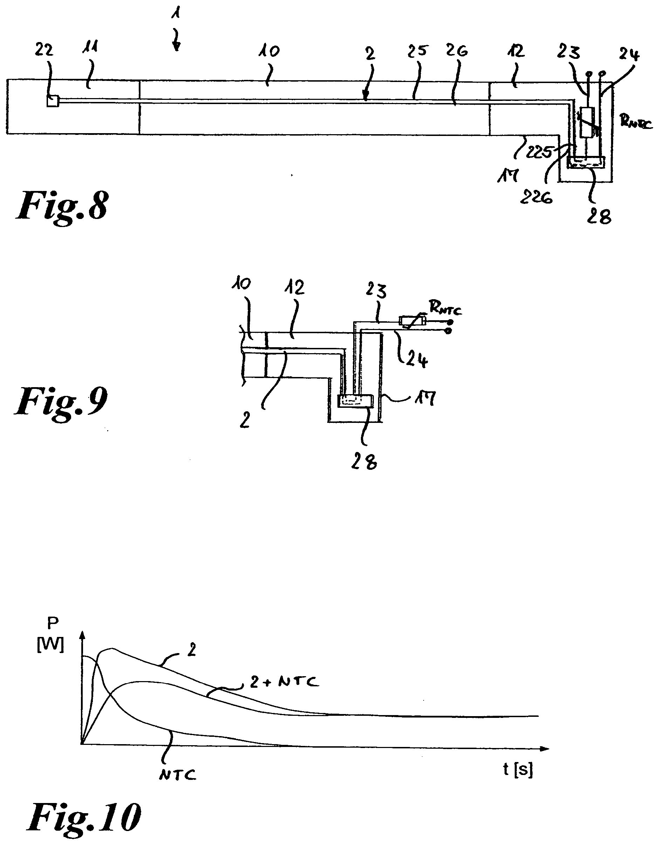

In Figur 7 ist der durch die Dotierung des elektrisch leitfähigen Kunststoffs durch die elektrisch leitfähigen Partikel, wie insbesondere Leitruß oder Kohlefasern, erzielte Effekt anhand eines Diagramms gezeigt, in dem die Heizleistung über der Zeit aufgetragen ist. Innerhalb der Heizzeit t_{H} von 0 bis 5 Minuten erfolgt eine Abregelung der Heizleistung von einem Maximalbetrag auf einen konstanten Betrag, der etwa einem Drittel der Ausgangsheizleistung, die zu Beginn des Heizvorgangs geliefert wird, entspricht. Die Ausgangsheizleistung wird insbesondere bei den bereits genannten -20 bis -35°C, also im kalten Zustand des gefriergefährdeten Mediums innerhalb der beheizbaren Medienleitung zur Verfügung gestellt. Aus Figur 7 ist ferner ersichtlich (siehe die beiden Linien A, B im oberen Bereich der Heizkurve), dass 1 bis 2 Watt, insbesondere 1,4 Watt pro Leitungsverbinder und 10 bis 16 W/m Medienleitung, insbesondere 12,5 bis 14 W/m Medienleitung zur Verfügung gestellt werden während des ersten Teils der Heizzeit t_{H}. Wie Figur 7 weiter entnommen werden kann, entsteht beim Einschalten der Heizbandlitze, also zu Beginn des Heizvorgangs ein hoher Einschaltstrom (siehe den steilen Anstieg der Heizkurve), der zum Auslösen einer Sicherung und somit zum Abbruch des Heizvorgangs führen kann. Um dem entgegenzuwirken, kann eine den Einschaltstrom senkende Einrichtung vorgesehen werden, die in Figur 8 bis 10 beispielhaft in Form eines NTC-Widerstands 30 gezeigt ist. Wie insbesondere dem Leistungs-Zeit-Diagramm in Figur 10 entnommen werden kann, führt der Leistungsabfall am NTC-Widerstand 30 zu einer Reduzierung des Einschaltstroms und somit zu einer Glättung der Heizkurve der Heizbandlitze 2 (mittlere Kurve in Figur 10, markiert mit "2 + NTC). Im Vergleich dazu ist in Figur 10 als oberste Heizkurve ohne zugeschalteten NTC-Widerstand gezeigt, markiert mit "2".

Der NTC-Widerstand 30 wird, wie in den Figuren 8 und 9 gezeigt, beispielsweise in einen der beiden elektrischen Zuleiter 23, 24 eingeschaltet. Wie in Figur 8 gezeigt, kann er innerhalb der Kappe 17 des Leitungsverbinders 12, in dem die elektrischen Zuleiter 23, 24 ebenso wie das Kontaktierungsende 225, 226 der Kontaktleiter 25, 26 der Heizbandlitze 2 angeordnet sind, angeordnet werden. Eine zweite Möglichkeit besteht darin, den NTC-Widerstand 30 außerhalb des Leitungsverbinders 12 anzuordnen, wie in Figur 9 gezeigt. Der NTC-Widerstand 30 wird somit zwischen der beheizbaren Medienleitung 1 und dem Elektrostecker, der am Ende der elektrischen Zuleiter 23, 24 angeordnet ist, angeordnet. Sie können im Inneren und außerhalb der isolierenden Kappe 17 angeordnet werden.

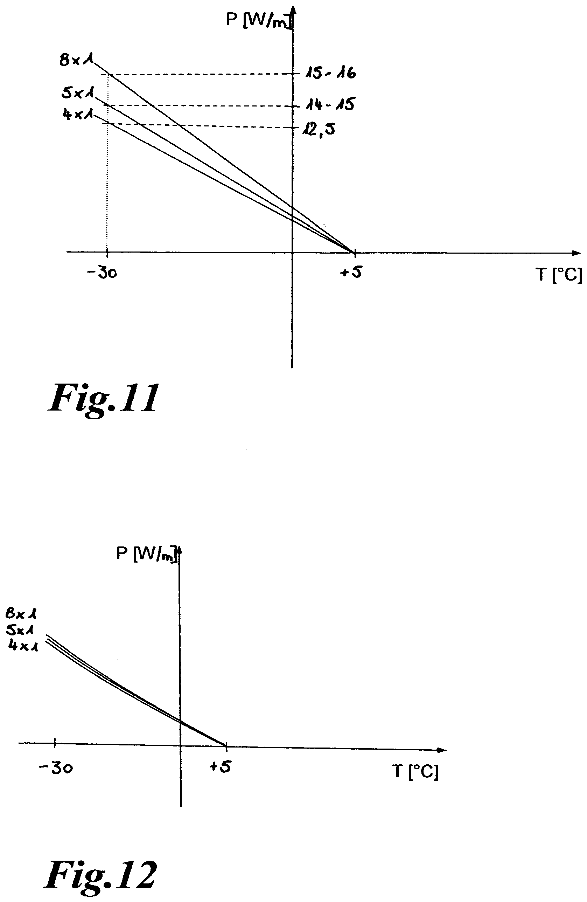

In den Figuren 11 und 12 sind zwei verschiedene Varianten der Auslegung der Kombination von Heizbandlitze 2 und Medienleitungen 10 unterschiedlichen

Außendurchmessers bzw. unterschiedlicher Abmessungen einerseits mit gleichbleibender Steigung (Figur 11) und andererseits mit jeweils unterschiedlichen Steigungen (Figur 12) gezeigt. Die einzelnen in den Figuren 11 und 12 gezeigten Kurven zeigen den Heizleistungsverlauf über dem Temperaturverlauf für eine 8 × 1 mm-Medienleitung, eine 5 × 1 mm-Medienleitung und eine 4 × 1 mm-Medienleitung als übliche Abmessungen von SCR-Leitungen. Bei Verwenden unterschiedlicher Heizbandlitzen 2, die jeweils eine andere spezifische Heizleistung aufweisen, für diese unterschiedlichen Abmessungen von Medienleitungen 10 werden die Heizbandlitzen 2 jeweils mit der gleichen Steigung von hier beispielhaft 70 mm auf die Medienleitungen 10 aufgewickelt. Bei -30 °C ergibt sich dabei bei einer 8 × 1 mm-Medienleitung eine Heizleistung von 15 - 16 W/m, bei einer 5 × 1 mm-Medienleitung eine Heizleistung von 14 - 15 W/m und bei 4 × 1 mm-Medienleitung eine Heizleistung von 12,5 W/m, jeweils auf der Medienleitung. Die Heizleistung nimmt mit zunehmender Temperatur stetig ab, bis sie bei einer Temperatur von +5°C bei allen drei Ausführungsvarianten von Medienleitungen jeweils auf 0 - 1 W/m, insbesondere 0,5 W/m, absinkt, so dass die Beheizung bei + 5°C vollständig abgeschaltet wird.

Bei der in Figur 12 gezeigten Ausführungsvariante der Auslegung verschiedener Medienleitungen mit unterschiedlichen Abmessungen von 8 × 1 mm, 5 × 1 mm und 4 × 1 mm wird jeweils die gleiche Heizbandlitze 2 verwendet, also eine Heizbandlitze mit gleicher spezifischer Heizleistung, die jedoch mit von Medienleitung zu Medienleitung variierenden Steigung auf diese aufgebracht wird, nämlich bei der Medienleitung mit der Abmessung von 8 × 1 mm mit einer Steigung von 50 mm, bei einer Medienleitung mit einer Abmessung von 5 × 1 mm mit einer Steigung von 60 mm und bei einer Medienleitung mit einer Abmessung von 4 × 1 mm mit einer Steigung von 70 mm. Es bestehen somit bei der Kombination der Medienleitungen 10 mit den Heizbandlitzen 2 zwei verschiedene Möglichkeiten, um das Ziel einer optimalen Beheizung der Medienleitung zu erreichen. In jedem Falle ist das Vorsehen weniger, wenn nicht sogar nur einer einzigen Variante einer Heizbandlitze ausreichend, um eine optimale Beheizung der beheizbaren Medienleitung vorzusehen, so dass das Portfolio an Heizbandlitzen aufgrund der Selbstregelung von dieser wenig umfangreich und somit sehr vorteilhaft ist. Es können jeweils Gleichteile verwendet werden, im Unterschied zum Stand der Technik, bei dem eine große Anzahl von verschiedenen Heizlitzen, die mit unterschiedlichen Steigungen auf Medienleitungen mit Leitungsverbindern aufgebracht werden, vorgesehen werden müssen. Das Verwenden von Gleichteilen durch das Vorsehen der Heizbandlitze 2 führt daher zu deutlichen Vorteilen auch im Hinblick auf Skaleneffekte. Der jeweilige Widerstand stellt sich bedarfsgerecht an jeder Stelle entlang der Längsstreckung der beheizbaren Medienleitung, die mit der Heizbandlitze 2 versehen ist, ein.

Neben den im Vorstehenden beschriebenen und in den Ausführungsbeispielen gezeigten Ausführungsvarianten von beheizbaren Medienleitungen, Verfahren zu deren Herstellung und Schaltungsanordnungen für diese können noch zahlreiche weitere vorgesehen werden, bei denen jeweils die Heizbandlitze zumindest zwei Kontaktleiter umfasst, die in Kontakt mit zumindest einem elektrisch leitfähigen Kunststoff, der mit elektrisch leitfähigen Partikeln in Nanogröße dotiert ist, stehen, wobei die Kontaktleiter bzw. die Widerstände der Kontaktleiter parallel geschaltet sind und wobei die Heizbandlitze beim Beheizen der Medienleitung und von deren zumindest einem Leitungsverbinder einen PTC-Effekt zeigt, also selbstregelnd ist.

### Bezugszeichenliste

- 1: beheizbare Medienleitung
- 1a: erste beheizbare Medienleitung
- 1b: zweite beheizbare Medienleitung
- 2: Heizbandlitze
- 2a: Heizbandlitze
- 2b: Heizbandlitze
- 3: Medium
- 4a, 4b, 4c, 4a', 4b', 4c': Heizlitze
- 5: Regelungseinrichtung
- 6: Dosiereinheit
- 7: Pumpe
- 8: Kraftfahrzeugtank
- 9: Trennstelle
- 10: Medienleitung
- 10a: Medienleitung
- 10b: Medienleitung
- 11: Leitungsverbinder
- 11a: Leitungsverbinder
- 11b: Leitungsverbinder
- 12: Leitungsverbinder
- 12a: Leitungsverbinder
- 12b: Leitungsverbinder
- 13: Spur
- 14: Spur
- 15: Wellrohr
- 16: isolierende Kappe
- 17: isolierende Kappe
- 18: Außenseite
- 20: erstes Ende von 2
- 21: zweites Ende von 2
- 22: isolierende Einrichtung
- 23: elektrischer Zuleiter
- 24: elektrischer Zuleiter
- 25: Kontaktleiter
- 26: Kontaktleiter
- 27: Crimpstelle
- 28: abdichtende Abdeckung
- 29: Zuleitung zur Spannungsversorgung
- 30: NTC-Widerstand
- 100: Medienleitung
- 105: Regelungseinrichtung
- 111: Leitungsverbinder
- 112: Leitungsverbinder
- 113: Crimpstelle
- 125: Kontaktleiterende
- 126: Kontaktleiterende
- 200: Medienleitung
- 211: Leitungsverbinder
- 212: Leitungsverbinder
- 213: Crimpstelle
- 225: Kontaktleiterende
- 226: Kontaktleiterende
- dₐ: Außendurchmesser von 10
- R: Widerstand
- R₁, R₂, R₃: Widerstände von Heizlitzen
- R_{1'}, R_{2'}, R_{3'}: Widerstände von Heizlitzen
- S: Steigung der Heizbandlitze
- s: Steigung der Wicklung der Heizlitze
- s': Steigung der Wicklung der Heizlitze
- t_{H}: Heizzeit
- A: Linie
- B: Linie

## Patentansprüche

1. Beheizbare Medienleitung (1,1a,1b) mit zumindest einem gefriergefährdeten Medium (3), wobei die beheizbare Medienleitung (1,1a, 1b) zumindest eine Medienleitung (10,10a,10b) mit zwei Leitungsverbindern (11,11a,11b,12,12a,12b) zum Anschluss der Medienleitung (10,10a,10b) an zumindest eine Komponente (6,7) und/oder eine andere beheizbare Medienleitung (1,1a,1b) und zumindest eine Heizeinrichtung zum Beheizen des durch die Medienleitung (10,10a,10b) und die Leitungsverbinder (11,11a,11b,12,12a,12b) strömenden Mediums (3) umfasst,
wobei die Heizeinrichtung eine Heizbandlitze (2,2a,2b) umfasst, die sich zumindest teilweise gewendelt um die Medienleitung (10,10a,10b) und deren zumindest einen Leitungsverbinder (11,11a,11b,12,12a,12b) herum erstreckt und in einen gut wärmeleitenden Kontakt mit diesen gebracht ist, die zumindest zwei Kontaktleiter (25,26) umfasst, die in Kontakt mit zumindest einem elektrisch leitfähigen Kunststoff mit elektrisch leitfähigen Partikeln in Nanogröße stehen und die bezüglich ihrer Widerstände (R) parallel geschaltet sind, **dadurch gekennzeichnet, dass**
die Heizbandlitze (2,2a,2b) beim Beheizen der Medienleitung (10,10a,10b) und von deren zumindest einem Leitungsverbinder (11,11a,11b,12,12a,12b) im Zusammenhang mit dem sich erwärmenden Medium (3) einen PTC-Effekt derart zeigt, dass sich ausgehend von einer Medientemperatur im Bereich des Gefrierpunktes des Mediums, oder unterhalb dieses Gefrierpunktes, ein etwa asymptotischer Temperaturverlauf, also eine Annäherung an einen vorgebbaren Temperaturwert, bei dem die Wärmezufuhr beendet wird, ergibt.

2. Beheizbare Medienleitung (1) nach Anspruch 1,
**dadurch gekennzeichnet, dass**
die Heizbandlitze (2,2a,2b) eine temperaturabhängige Heizleistungsbegrenzung mit einem asymptotischen Temperaturverlauf in einem Temperaturbereich von +5°C bis + 80°C, insbesondere 20°C bis +60°C, und eine längenunabhängige spezifische Heizleistung im Bereich von 10 bis 16 W/m im Bereich der Medienleitung und 1 bis 2 Watt pro Leitungsverbinder, insbesondere im Bereich von 12,5 bis 14 W/m im Bereich der Medienleitung (10, 10a, 10b) und 1,4 Watt pro Leitungsverbinder (11, 11a, 11b, 12, 12a, 12b), zur Verfügung stellt.

3. Verfahren zum Herstellen einer beheizbaren Medienleitung (1,1a,1b) mit Medienleitung (10,10a,10b) und zwei Leitungsverbindern (11,11a,11b, 12,12a, 12b) nach einem der vorstehenden Ansprüche,
**dadurch gekennzeichnet, dass**
die Medienleitung (10,10a,10b) und zumindest einer der Leitungsverbinder (11,11a,11b,12,12a,12b) mit einer Heizbandlitze (2,2a,2b) bewickelt wird, ein erstes Ende (20) der Heizbandlitze (2,2a,2b) mit einer Isolation (22) von deren Kontaktleiterenden (125,126) und ein zweites Ende (21) der Heizbandlitze (2,2a,2b) mit einer elektrischen Kontaktierung (23,24) der Kontaktleiterenden (225,226) versehen wird.

4. Verfahren nach Anspruch 3,
**dadurch gekennzeichnet, dass**
in Abhängigkeit von dem Außendurchmesser (dₐ) der Medienleitung (10,10a,10b) Heizbandlitzen (2,2a,2b) mit unterschiedlicher spezifischer Heizleistung verwendet werden, die mit jeweils derselben Steigung (S) auf die Medienleitung (10,10a,10b) aufgewickelt werden, insbesondere Medienleitungen (10,10a,10b) mit geringen Außendurchmessern (dₐ) mit jeweils derselben Steigung (S) wie Medienleitungen (10,10a,10b) mit größeren Außendurchmessern (dₐ), jedoch mit Heizbandlitzen (2,2a,2b) mit niedrigerer spezifischer Heizleistung als Medienleitungen (10,10a,10b) mit größeren Außendurchmessern (dₐ) bewickelt werden.

5. Verfahren nach Anspruch 3,
**dadurch gekennzeichnet, dass**
in Abhängigkeit von dem Außendurchmesser (dₐ) der Medienleitung (10,10a,10b) die Steigung (S) der Wicklung der Heizbandlitze (2,2a,2b) auf der Medienleitung (10,10a,10b) bei Verwenden von Heizbandlitzen (2,2a,2b) mit gleicher spezifischer Heizleistung jeweils variiert wird, insbesondere bei Medienleitungen (10,10a,10b) mit unterschiedlichen Außendurchmessern (dₐ) jeweils Heizbandlitzen (2,2a,2b) mit gleicher spezifischer Heizleistung verwendet werden, die bei einer Medienleitung (10,10a, 10b) mit einem geringen Außendurchmesser (dₐ) mit einer höheren Steigung (S) als bei einer Medienleitung (10,10a,10b) mit einem größeren Außendurchmesser (dₐ) aufgewickelt werden.

6. Beheizbare Medienleitung (1,1a,1b) nach Anspruch 1 oder 2, mit Medienleitung (10,10a,10b) mit zumindest einem endseitigen Leitungsverbinder (11,11a,11b,12,12a,12b), wobei eine Heizbandlitze (2,2a,2b) sich entlang der Medienleitung (10,10a,10b) und des zumindest einen Leitungsverbinders (11,11a,11b,12,12a,12b) erstreckt, wobei die Heizbandlitze (2,2a,2b) zumindest zwei in einem elektrisch leitfähigen Kunststoff eingebettete, parallel zueinander angeordnete Kontaktleiter (25,26) aufweist, die bezüglich ihres Widerstandes (R) zueinander parallel geschaltet sind, wobei ein Ende (125,126) der Kontaktleiter (25,26) elektrisch isoliert (22) und das andere Ende (225,226) der Kontaktleiter (25,26) mit elektrischen Zuleitern (23,24) zum Anschluss an eine elektrische Energieversorgung kontaktiert ist.

7. Beheizbare Medienleitung nach Anspruch 6,
**dadurch gekennzeichnet, dass**
zum Vermeiden oder Reduzieren eines hohen Einschaltstroms zumindest eine einem hohen Einschaltstrom entgegenwirkende Einrichtung geschaltet ist, insbesondere ein NTC-Widerstand (30) in Reihe mit der Heizbandlitze (2,2a,2b) geschaltet ist.

8. Beheizbare Medienleitung nach Anspruch 7,
**dadurch gekennzeichnet, dass**
die einem hohen Einschaltstrom entgegenwirkende Einrichtung (30) in einen der elektrischen Zuleiter (23,24) der Heizbandlitze (2,2a,2b) integriert und/oder zwischen diesem und einem Stecker zum Anschluss des elektrischen Zuleiters (23,24) an eine elektrische Energieversorgung geschaltet ist.

9. Beheizbare Medienleitung nach Anspruch 6 oder 7,
**dadurch gekennzeichnet, dass**
zumindest ein Dämpfungselement vorgesehen und der Heizbandlitze (2,2a,2b) vorgeschaltet ist.

10. Beheizbare Medienleitung nach einem der Ansprüche 6 bis 8,
**dadurch gekennzeichnet, dass**
die Schaltungsanordnung frei von einer zusätzlichen Regelungseinrichtung (5) ist, so dass sie nur spannungsversorgt ist und autonom selbstregelnd leitet.

11. 2- Beheizbare Medienleitung nach einem der Ansprüche 6 bis 9,
**dadurch gekennzeichnet, dass**
bei Koppeln zweier durch jeweils eine Heizbandlitze (2a,2b) beheizbarer Medienleitungen (1a,1b) die Heizbandlitzen (2a,2b) in Reihe geschaltet sind, wobei nur ein Anschluss an eine elektrische Energieversorgung vorgesehen ist.

12. Beheizbare Medienleitung nach einem der Ansprüche 6 bis 9,
**dadurch gekennzeichnet, dass**
bei Koppeln zweier durch jeweils eine Heizbandlitze (2a,2b) beheizbarer Medienleitungen (1a, 1b) die Heizbandlitzen (2a,2b) parallel geschaltet sind, wobei jede der Heizbandlitzen (2a,2b) getrennt an eine elektrische Energieversorgung anschließbar oder angeschlossen ist.

13. Beheizbare Medienleitung nach Anspruch 12,
**dadurch gekennzeichnet, dass** elektrische Zuleiter (23,24) oder eine separate elektrische Zuleitung (29) zum Anschluss der von der elektrischen Energieversorgung entfernt angeordneten Heizbandlitze (2a) der ersten Medienleitung (1a) entlang der zweiten Medienleitung (1b) geführt ist.

14. Beheizbare Medienleitung nach einem der Ansprüche 6 bis 12,
**dadurch gekennzeichnet, dass**
eine Heizlitze vorgesehen und zu der Heizbandlitze (2,2a,2b) parallel geschaltet ist.

15. Beheizbare Medienleitung nach einem der Ansprüche 6 bis 13,
**dadurch gekennzeichnet, dass**
eine Heizlitze vorgesehen und zu der Heizbandlitze (2,2a,2b) in Reihe geschaltet ist.

## Claims

1. Heatable media line (1, 1a, 1b) with at least one medium (3) at risk of freezing,
wherein the heatable media line (1, 1a, 1b) comprises at least one media line (10, 10a, 10b) having two line connectors (11, 11a, 11b, 12, 12a, 12b) for connecting the media line (10, 10a, 10b) to at least one component (6, 7) and/or to another heatable media line (1, 1a, 1b) and at least one heating device for heating the medium (3) flowing through the media line (10, 10a, 10b) and the line connectors (11, 11a, 11b, 12, 12a, 12b),
wherein
the heating device comprises a heater-band strand (2, 2a, 2b) which extends at least in part in wound form around the media line (10, 10a, 10b) and the at least one line connector (11, 11a, 11b, 12, 12a, 12b) thereof and is brought into good heat-conducting contact therewith, which heater-band strand comprises at least two contact conductors (25, 26) which are in contact with at least one electrically conductive plastics material having electrically conductive nano-sized particles and which are connected in parallel in respect of their resistances (R),
**characterised in that** the heater-band strand (2, 2a, 2b), on heating of the media line (10, 10a, 10b) and of the at least one line connector (11, 11a, 11b, 12, 12a, 12b) thereof,exhibits a PTC effect in connection with the warming medium (3), such that, starting from a media temperature in the region of the freezing point of the medium, or below that freezing point, an approximately asymptotic temperature curve, that is to say an approach to a specifiable temperature value, at which the heat input is terminated, is obtained.

2. Heatable media line (1) according to claim 1,
**characterised in that**
the heater-band strand (2, 2a, 2b) provides a temperature-dependent heat output limitation with an asymptotic temperature curve in a temperature range from +5°C to +80°C, in particular from +20°C to +60°C, and a length-independent specific heat output in the range from 10 to 16 W/m in the region of the media line and from 1 to 2 watts per line connector, in particular in the range from 12.5 to 14 W/m in the region of the media line (10, 10a, 10b) and 1.4 watts per line connector (11, 11a, 11b, 12, 12a, 12b).

3. Method for producing a heatable media line (1, 1a, 1b) having a media line (10, 10a, 10b) and two line connectors (11, 11a, 11b, 12, 12a, 12b) according to any one of the preceding claims,
**characterised in that**
the media line (10, 10a, 10b) and at least one of the line connectors (11, 11a, 11b, 12, 12a, 12b) is wound with a heater-band strand (2, 2a, 2b), a first end (20) of the heater-band strand (2, 2a, 2b) is provided with insulation (22) of the contact conductor ends (125, 126) thereof and a second end (21) of the heater-band strand (2, 2a, 2b) is provided with electrical contacting (23, 24) of the contact conductor ends (225, 226).

4. Method according to claim 3,
**characterised in that**
in dependence on the outside diameter (dₐ) of the media line (10, 10a, 10b), heater-band strands (2, 2a, 2b) with different specific heat outputs are used, which heater-band strands are each wound on the media line (10, 10a, 10b) with the same pitch (S), in particular media lines (10, 10a, 10b) with small outside diameters (dₐ) are wound with the same pitch (S) as media lines (10, 10a, 10b) with larger outside diameters (dₐ) but with heater-band strands (2, 2a, 2b) with a lower specific heat output than media lines (10, 10a, 10b) with larger outside diameters (dₐ).

5. Method according to claim 3,
**characterised in that**
in dependence on the outside diameter (dₐ) of the media line (10, 10a, 10b), the pitch (S) of the winding of the heater-band strand (2, 2a, 2b) on the media line (10, 10a, 10b) is varied in each case when heater-band strands (2, 2a, 2b) of the same specific heat output are used, in particular in the case of media lines (10, 10a, 10b) with different outside diameters (dₐ) heater-band strands (2, 2a, 2b) with the same specific heat output are used in each case, which heater-band strands are wound in the case of a media line (10, 10a, 10b) with a small outside diameter (dₐ) with a greater pitch (S) than in the case of a media line (10, 10a, 10b) with a larger outside diameter (dₐ).

6. Heatable media line (1, 1a, 1b) according to claim 1 or 2, having a media line (10, 10a, 10b) with at least one terminal line connector (11, 11a, 11b, 12, 12a, 12b), wherein a heater-band strand (2, 2a, 2b) extends along the media line (10, 10a, 10b) and the at least one line connector (11, 11a, 11b, 12, 12a, 12b), wherein the heater-band strand (2, 2a, 2b) has at least two contact conductors (25, 26) arranged parallel to one another and embedded in an electrically conductive plastics material,which contact conductors are connected in parallel with one another in respect of their resistances (R), wherein one end (125, 126) of the contact conductors (25, 26) is electrically insulated (22) and the other end (225, 226) of the contact conductors (25, 26) is contacted with electrical feed conductors (23, 24) for connection to an electrical power supply.

7. Heatable media line according to claim 6,
**characterised in that**
in order to avoid or reduce a high switch-on current, at least one device that counteracts a high switch-on current is provided, in particular a NTC resistor (30) is connected in series with the heater-band strand (2, 2a, 2b).

8. Heatable media line according to claim 7,
**characterised in that**
the device (30) that counteracts a high switch-on current is integrated into one of the electrical feed conductors (23, 24) of the heater-band strand (2, 2a, 2b) and/or is connected between this and a plug for connection of the electrical feed conductor (23, 24) to an electrical power supply.

9. Heatable media line according to claim 6 or 7,
**characterised in that**
at least one damping element is provided and arranged upstream of the heater-band strand (2, 2a, 2b).

10. Heatable media line according to any one of claims 6 to 8,
**characterised in that**
the circuit arrangement is free of an additional control device (5), so that it is only supplied with power and conducts in an autonomously self-regulating manner.

11. Heatable media line according to any one of claims 6 to 9,
**characterised in that**
when two media lines (1a, 1b) which are each heatable by a heater-band strand (2a, 2b) are coupled, the heater-band strands (2a, 2b) are connected in series, wherein only one connection to an electrical power supply is provided.

12. Heatable media line according to any one of claims 6 to 9,
**characterised in that**
when two media lines (1a, 1b) which are each heatable by a heater-band strand (2a, 2b) are coupled, the heater-band strands (2a, 2b) are connected in parallel, wherein each of the heater-band strands (2a, 2b) is connectable or connected separately to an electrical power supply.

13. Heatable media line according to claim 12,
**characterised in that**
electrical feed conductors (23, 24) or a separate electrical supply line (29) for connection of the heater-band strand (2a), arranged apart from the electrical power supply, of the first media line (1a) is guided along the second media line (1b).

14. Heatable media line according to any one of claims 6 to 12,
**characterised in that**
a heating strand is provided and is connected in parallel with the heater-band strand (2, 2a, 2b).

15. Heatable media line according to any one of claims 6 to 13,
**characterised in that**
a heating strand is provided and is connected in series with the heater-band strand (2, 2a, 2b).

## Revendications

1. Conduite de fluide chauffante (1, 1a, 1b) avec au moins un fluide (3) susceptible de geler, la conduite de fluide chauffante (1, 1a, 1b) comportant au moins une conduite de fluide (10, 10a, 10b) avec deux raccords de conduite (11, 11a, 1b, 12, 12a, 12b) pour connecter la conduite de fluide (10, 10a, 10b) vers au moins un composant (6, 7) et/ou une autre conduite de fluide chauffante (1, 1a, 1b) et au moins un dispositif de chauffage pour le chauffage à travers la conduite de fluide (10, 10a , 10b) et le raccord de conduite (11, 11a, 11b, 12, 12a, 12b) du fluide (3), le dispositif de chauffage comprenant un ruban chauffant (2, 2a, 2b) qui s'étend au moins partiellement enroulé autour de la conduite de fluide (10, 10a, 10b) et de son au moins un raccord de conduite (1, 11a, 11b, 12, 12a, 12b) et est mis en bon contact de conduction thermique avec ceux-ci, qui comprend au moins deux conducteurs de contact (25, 26) qui sont en contact avec au moins une matière plastique électriquement conductrice par des particules électriquement conductrices nanométriques et qui sont connectés en parallèle en ce qui concerne leurs résistances (R),
**caractérisée en ce que** le ruban chauffant (2, 2a, 2b) présente un effet CTP lors du chauffage de la conduite de fluide (10, 10a, 10b) et d'au moins un raccord de conduite (11, 11a, 11b, 12, 12a, 12b) en liaison avec le fluide devant être chauffé (3) de telle sorte que, à partir d'une température moyenne dans la plage du point de congélation du fluide, ou en dessous de ce point de congélation, on obtient une courbe de température sensiblement asymptotique, et ainsi une valeur de température spécifiable à laquelle le chauffage est interrompu.

2. Conduite de fluide chauffante (1) selon la revendication 1, **caractérisée en ce que** le ruban chauffant (2, 2a, 2b) présente une limitation de la puissance de chauffe dépendant de la température avec un profil de température asymptotique dans une plage de températures de +5°C à +80°C, notamment +20°C à + 60°C, et une puissance de chauffe spécifique indépendante de la longueur de l'ordre de 10 à 16 W/m dans la zone de la conduite de fluide et de 1 à 2 watt par raccord de conduite, en particulier dans la plage de 12,5 à 14 W/m dans la zone de la conduite de fluide (10, 10a, 10b) et de 1, 4 watts par raccord de conduite (11, 11a, 11b, 12, 12a, 12b).

3. Procédé de fabrication d'une conduite de fluide chauffante (1, 1a, 1b) avec une conduite de fluide (10, 10a, 10b) et deux raccords de conduite (11, 11a, 11b, 12, 12a, 12b) selon l'une des revendications précédentes, **caractérisé en ce que** la conduite de fluide (10, 10a, 10b) et au moins un des raccords de conduite (11, 11a, 11b, 12, 12a, 12b) sont entourés d'un ruban chauffant (2, 2a, 2b), une première extrémité (20) du ruban chauffant (2, 2a, 2b) présentant une isolation (22) des extrémités des conducteurs de contact (125, 126) et une seconde extrémité (21) du ruban chauffant (2,2a, 2b) étant pourvu d'un contact électrique (23, 24) des extrémités de chaque conducteur de contact (225, 226).

4. Procédé selon la revendication 3, **caractérisé en ce que**
en fonction du diamètre extérieur (dₐ) de la conduite de fluide (10, 10a, 10b) on utilise des rubans chauffants (2,2a, 2b) avec une puissance de chauffage spécifique différente, qui sont enroulés sur la conduite de fluide (10, 10a, 10b) avec le même pas (S), en particulier des conduites de fluide (10, 10a, 10b) avec de petits diamètres extérieurs (dₐ) sont entourés de rubans chauffants (2, 2a, 2b) présentant le même pas (S) que des conduites de fluide (10, 10a, 10b) avec des diamètres extérieurs plus grands (dₐ), mais présentant une puissance de chauffage spécifique inférieure à celle pour des conduites de fluide (10, 10a, 10b) avec des diamètres extérieurs plus grands (dₐ).

5. Procédé selon la revendication 3, **caractérisé en ce que**
en fonction du diamètre extérieur (dₐ) de la conduite de fluide (10, 10a, 10b), le pas (S) de l'enroulement de ruban chauffant (2, 2a, 2b) sur la conduite de fluide (10, 10a, 10b) lors de l'utilisation de rubans chauffants (2, 2a, 2b) est varié avec la même puissance de chauffage spécifique, en particulier dans le cas de conduites de fluide (10, 10a, 10b) avec des diamètres extérieurs différents (dₐ), des rubans chauffants (2, 2a, 2b) avec la même puissance de chauffage spécifique sont utilisés, et enroulés avec un pas plus élevé (S) pour une conduite de fluide (10, 10a, 10b) présentant un petit diamètre extérieur (dₐ) que pour une conduite de fluide (10, 10a, 10b) présentant un plus grand diamètre extérieur (dₐ).

6. Conduite de fluide chauffante (1, 1a, 1b) selon la revendication 1 ou 2, avec une conduite de fluide (10, 10a, 10b) avec au moins un raccord de conduite (11, 11a, 11b, 12, 12a, 12b), dans laquelle le ruban chauffant (2, 2a, 2b) s'étend le long de la conduite de fluide (10, 10a, 10b) et de l'au moins un raccord de conduite (11, 11a, 11b, 12, 12a, 12b), le ruban chauffant (2, 2a, 2b) comprend au moins deux conducteurs de contact (25, 26) noyés dans une matière plastique conductrice de l'électricité, parallèlement l'un à l'autre, et qui sont connectés en parallèle l'une à l'autre en ce qui concerne leur résistance (R), une extrémité (125, 126) de chaque conducteur de contact (25, 26) étant isolée électriquement (22) et l'autre extrémité (225, 226) de chaque conducteur de contact (25, 26) étant reliée à des fils électriques (23, 24) pour connexion à une alimentation électrique.

7. Conduite de fluide chauffante selon la revendication 6, **caractérisé en ce que** afin d'éviter ou de réduire un courant d'appel élevé, au moins un dispositif s'opposant à un courant d'appel élevé est connecté, en particulier une résistance NTC (30) est connectée en série avec le ruban chauffant (2, 2a, 2b).

8. Conduite de fluide chauffante selon la revendication 7, **caractérisé en ce que** le dispositif (30) s'opposant à un courant d'appel élevé est intégré dans l'un des conducteurs électriques (23, 24) du ruban chauffant (2, 2a, 2b) et/ou est connecté entre celui-ci et une fiche de connexion du conducteur électrique (23, 24) à une alimentation électrique.

9. Conduite de fluide chauffante selon la revendication 6 ou 7, **caractérisé en ce que** au moins un élément amortisseur est prévu et le ruban chauffant (2, 2a, 2b) est connecté en amont.

10. Conduite de fluide chauffante selon l'une des revendications 6 à 8, **caractérisé en ce que**
le circuit est exempt d'un dispositif de commande supplémentaire (5), de sorte qu'il n'est alimenté qu'en tension et qu'il se comporte de manière autonome autorégulée.

11. Conduite de fluide chauffante selon l'une des revendications 6 à 9, **caractérisé en ce que**
lors du couplage de deux conduites de fluide (1a, 1b) pouvant être chauffées par des rubans chauffants respectifs (2a, 2b), les rubans chauffants (2a, 2b) sont connectés en série, une seule connexion à une alimentation électrique étant prévue.

12. Conduite de fluide chauffante selon l'une des revendications 6 à 9, **caractérisé en ce que**
lors du couplage de deux conduites de fluide (1a, 1b) pouvant être chauffées par des rubans chauffants respectifs (2a, 2b), les rubans chauffants (2a, 2b) sont connectés en parallèle, chacun des rubans chauffants pouvant être raccordé séparément ou connecté à une alimentation électrique.

13. Conduite de fluide chauffante selon la revendication 12, **caractérisé en ce que** un conducteur électrique (23, 24) ou un conducteur électrique séparé (29) pour connecter le ruban chauffant (2a) de la première conduite de fluide (la), qui est disposé à distance de l'alimentation électrique, est guidé le long de la seconde conduite de fluide (1b).

14. Conduite de fluide chauffante selon l'une des revendications 6 à 12, **caractérisé en ce que**
un fil chauffant est prévu et est connecté en parallèle au ruban chauffant (2, 2a, 2b).

15. Conduite de fluide chauffante selon l'une des revendications 6 à 13, **caractérisé en ce que**
un fil chauffant est prévu et connecté en série avec le ruban chauffant (2, 2a, 2b).
